(19) Europäisches Patentamt
European Patent Office
Office européen des brevets

(11) **EP 3 398 753 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(51) Int Cl.:
*B29C 65/02* *(2006.01)*  *B29C 35/16* *(2006.01)*
*B29C 53/50* *(2006.01)*  *B29C 65/36* *(2006.01)*
*B29D 23/20* *(2006.01)*  *B29L 23/20* *(2006.01)*

(21) Anmeldenummer: **17169612.3**

(22) Anmeldetag: **05.05.2017**

(54) **VERFAHREN UND VORRICHTUNG ZUM HERSTELLEN EINES ENDLOSEN TUBENROHRS**

METHOD AND DEVICE FOR MANUFACTURING A CONTINUOUS TUBE PIPE

PROCÉDÉ ET DISPOSITIF DE FABRICATION D'UN TUYAU TUBULAIRE CONTINU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.11.2018 Patentblatt 2018/45**

(73) Patentinhaber: **PackSys Global AG**
**8630 Rüti (CH)**

(72) Erfinder: **ESSER, Ulrich**
**8630 Rüti (CH)**

(74) Vertreter: **Patentanwälte Behrmann Wagner PartG mbB**
**Maggistraße 5**
**Hegau-Tower (10. OG)**
**78224 Singen (DE)**

(56) Entgegenhaltungen:
**EP-A2- 1 488 913    BE-A- 674 464**
**CH-A5- 695 937    DE-B4-102015 102 254**
**JP-A- H01 186 317    US-A1- 2016 368 641**

EP 3 398 753 B1

## Beschreibung

Die Erfindung betrifft ein Verfahren zum Herstellen eines endlosen, flexiblen (deformierbaren) Tubenrohres für die Herstellung von Kunststofftuben gemäß dem Oberbegriff des Anspruchs 1, wobei ein mindestens eine Kunststoffschicht umfassendes oder daraus bestehendes, flexibles Substratband, insbesondere ein, ganz besonders bevorzugt mindestens eine Barriereschicht gegen Gas-, insbesondere Sauerstoff- und/oder Feuchtigkeitsdurchtritt umfassendes, Laminat zu einer Rohrform geformt und in einer Förderrichtung entlang von Schweißmitteln gefördert und entlang seiner sich in der Förderrichtung erstreckenden Längskanten unter Ausbildung einer Längsschweißnaht verschweißt und danach durch unmittelbares Beaufschlagen (Inkontaktbringen) mit einer Kühlflüssigkeit im Bereich der Schweißnaht gekühlt wird.

Ferner betrifft die Erfindung eine Vorrichtung zum Herstellen eines endlosen, flexiblen Tubenrohres zur Herstellung von Kunststofftuben gemäß dem Oberbegriff des Anspruchs 11, wobei die Vorrichtung bevorzugt ausgebildet ist zur Durchführung eines erfindungsgemäßen Verfahrens. Die Vorrichtung umfasst Mittel zum Umformen eines, mindestens eine Kunststoffschicht umfassenden oder daraus bestehenden, flexiblen Substratbandes, insbesondere eines Laminates zu einer Rohrform sowie Mittel zum Fördern der Rohrform in einer Förderrichtung entlang von Schweißmitteln, die ausgebildet sind zum Verschweißen des zur Rohrform geformten Substrates entlang seiner sich in der Förderrichtung erstreckenden Längskanten unter Ausbildung einer Längsschweißnaht, ferner umfassend Mittel zum Kühlen der Rohrform durch unmittelbares Beaufschlagen (des zur Rohrform geformten Substratbandes) mit einer Kühlflüssigkeit im Bereich der Schweißnaht.

Grundsätzlich ist es im Rahmen der Tubenherstellung bekannt, dass eine Abkühlung der von einem vorgelagerten Schweißprozess noch heißen Längsschweißnaht zur Verbesserung der Rundheit des resultierenden endlosen Tubenrohres beiträgt.

In diesem Zusammenhang ist in der CH 695 937 A5 beschriebenen, die Rohrform innerhalb einer geschlossenen Kammer mit Wasser zu besprühen, wobei die in der Kammer befindliche Luft mit Feuchtigkeit gesättigt ist. Die zugeführte Wassermenge wird an einem Abfluss der Kammer abgeführt. Ein Großteil der zugeführten Wassermenge kommt bei der bekannten Vorrichtung gar nicht in Kontakt mit der Schweißnaht. Nachteilig bei dem bekannten Verfahren und der bekannten Vorrichtung ist die große, für eine effektive Kühlung benötigte Wassermenge und die hieraus resultierende Gefahr einer Keim- bzw. Algenbildung in der Kühlkammer.

Ein alternatives Verfahren ist in der DE 10 2015 102 254 B4 beschrieben. Aus dieser Druckschrift ist es bekannt, die Rohrform im Bereich der Längsschweißnaht nach radial innen zu stülpen, wobei die Verformung der Rohrform so durchgeführt wird, dass in der Rohrform eine Rinne gebildet wird innerhalb der die Längsschweißnaht vollständig mit in der Rinne befindlicher Kühlflüssigkeit bedeckt wird. Da die Längsschweißnaht die Rinne bzw. das darin befindliche Kühlflüssigkeitsbad in relativ kurzer Zeit durchläuft, wird eine vergleichsweise große Kühlflüssigkeitsmenge zur Erzielung des gewünschten Kühleffektes benötigt. Der erforderliche Kühlflüssigkeitszulaufmassestrom stellt in der praktischen Realisierung ein Problem dar, da im Wesentlichen der gesamte zugeführte Kühlflüssigkeitsmassestrom wieder abgeführt werden muss. Dabei ist es technisch aufwendig die abfließende Kühlflüssigkeit aufzufangen bzw. zu sammeln und abzuführen und ggf. für eine Nochmalsnutzung zu reinigen. Auch besteht hier die Gefahr der Keim- und Algenbildung.

Ausgehend von dem vorgenannten Stand der Technik liegt der Erfindung die Aufgabe zugrunde ein gattungsgemäßes Verfahren zur Herstellung eines endlosen Tubenrohres dahingehend zu verbessern, den zuzuführenden Kühlflüssigkeitsmassestrom zu reduzieren sowie die Möglichkeit zu schaffen, die erzielte Endtemperatur nach der Flüssigkeitskühlung weiter zu reduzieren, insbesondere auf Temperaturen von unter 60°C, noch weiter bevorzugt von unter 50°C, ganz besonders bevorzugt unter 40°C. Auch soll die Gefahr einer Verkeimung/Algenbildung im Bereich der Kühlstrecke auf ein Minimum reduziert werden.

Ferner besteht die Aufgabe eine entsprechende Vorrichtung anzugeben, mit welcher die vorerwähnten Vorteile erreicht bzw. die Nachteile im Stand der Technik vermieden werden können.

Diese Aufgabe wird verfahrensgemäß mit den Merkmalen des Anspruchs 1 gelöst, d.h. bei einem gattungsgemäßen Verfahren dadurch, dass die Kühlflüssigkeit vor dem Benetzen (der Rohrform) vernebelt wird und die Längsschweißnaht mit Kühlflüssigkeitsnebel benetzt wird und zusätzlich externes, d.h. von außerhalb des Kühl- bzw. Kühlflüssigkeitsnebelbeaufschlagungsbereichs zugeführtes Trägergas, insbesondere Druckgas, zugeführt wird, sodass der Kühlflüssigkeitsnebel beim Kontakt mit der Rohrform einen Phasewechsel in die Gasphase vollzieht und (dann, d.h. in der Gasphase) mit dem Trägergas abtransportiert wird.

Hinsichtlich der Vorrichtung wird die Aufgabe mit den Merkmalen des Anspruchs 11 gelöst, d.h. bei einer gattungsgemäßen Vorrichtung dadurch, dass die Mittel zum Kühlen der Rohrform Vernebelungsmittel zum Vernebeln der zugeführten Kühlflüssigkeit vor dem Benetzen der Rohrform aufweisen, die so ausgebildet und angeordnet sind, dass die Längsschweißnaht mit Kühlflüssigkeitsnebel beaufschlagbar ist, und dass die Mittel zum Kühlen der Rohrform Trägergasmittel zum Zuführen von externen Trägergas, insbesondere Druckgas aufweisen, sodass von dem Kühlflüssigkeitsnebel ein Phasenwechsel in die Gasphase vollziehbar und von dem Trägergas abtransportierbar ist.

Der Erfindung liegt zunächst die Erkenntnis zugrunde, dass in der Praxis bei aktuell üblichen Substratbandgeschwindigkeiten effektive Kühlleistungen zwischen rund 5 W und 100 W und bei noch schneller laufenden, insbesondere zukünftigen Prozessen noch höhere Kühlleistungen erforderlich sind, um die Längsschweißnaht um ein gewünschtes Maß zu kühlen, um dadurch die Rundheit zu verbessern bzw. einen Verzug zu vermeiden.

Der Erfindung liegt nun der Gedanke zugrunde, die Kühlung derart zu realisieren, dass ein relevanter Anteil der zugeführten Kühlflüssigkeit eine Phasenumwandlung vollzieht, d.h. den Aggregatzustand in die Gasphase wechselt. Hierdurch kann die zur Verdampfung von Kühlflüssigkeit notwendige Verdampfungsenthalpie zur Kühlung der Längsschweißnaht genutzt werden. Für den beispielhaften Fall des Einsatzes von Wasser als Kühlmedium beträgt die Verdampfungsenthalpie von Wasser ca. 2255 kJ/kg bei 100°C bzw. sogar ca. 2440 kJ/kg bei 25°C. Dadurch, dass der Längsschweißnaht die benötigte Verdampfungswärme, insbesondere durch unmittelbaren Kontakt durch die der Kühlflüssigkeit entzogen wird bzw. dieser zur Verbesserung des Kühleffekts entzogen wird, kann der zum Einsatz kommende Kühlflüssigkeitsmassestrom im Vergleich zu den bekannten Lösungen deutlich, d.h. um ein Vielfaches reduziert werden, mit der Folge, dass es nicht mehr wie im Stand der Technik notwendig ist, sehr große Kühlwassermengen vollständig abzuführen; auch wird aufgrund der reduzierten Feuchtigkeitsmenge die Gefahr einer Bakterien- und Algenbildung deutlich reduziert.

Die Erfinder haben erkannt, dass zunächst gewisse technische Rahmenbedingungen erfüllt werden müssen, damit im Rahmen der Kühlung der Längsschweißnaht eines Endlos-Tubenrohres der Phasenwechsel eines großen Anteils des zugeführten Kühlflüssigkeitsmassestroms gelingt. So ist zunächst erfindungsgemäß vorgesehen, die Rohrform nicht irgendwie mit einer reduzierten Kühlwassermenge zu beaufschlagen, sondern die zugeführte Kühlflüssigkeit wird erfindungsgemäß zur Vergrößerung der Oberfläche vernebelt. Mit anderen Worten wird die Kühlflüssigkeit vor dem Benetzen der Rohrform vernebelt, d.h. feinstverteilt so dass die Schweißnaht mit Kühlflüssigkeitsnebel benetzt wird. Die Vernebelung erfolgt bevorzugt mittels einer Vernebelungs- bzw. Feinstdüse.

Darüber hinaus muss erfindungsgemäß dafür Sorge getragen werden, dass das den Kühlbereich umgebende Gas, beispielsweise Luft, erhebliche Mengen an Feuchtigkeit aufnehmen kann und diese auch aus dem Kühlbereich abtransportiert wird. Um dies zu gewährleisten, schlagen die Erfinder als weitere Maßnahme vor, dem Kühlbereich bzw. Verdampfungs-Bereich externes (d.h. von außerhalb des Kühl- bzw. Kühlnebelbeaufschlagungsbereichs zugeführtes), bevorzugt möglichst trockenes, Trägergas, insbesondere über eine Druckgasleitung, zuzuführen, um den Phasenwechsel der Kühlflüssigkeit in die Gasphase zu ermöglichen bzw. zu optimieren und somit die vom Trägergas aufgenommene Feuchtigkeit mit dem abströmenden Trägergas mitzuführen und beispielsweise, insbesondere außerhalb einer Produktionshalle an die Atmosphäre abzugeben. Da die mit dem erfindungsgemäßen Verfahren und der erfindungsgemäßen Vorrichtung entstehenden Feuchtigkeitseinträge gering sind, reicht alternativ auch eine übliche Raumbelüftung von Produktionsräumen für einen sicheren und kondensatfreien Abtransport aus.

Anders ausgedrückt liegt der Erfindung also der Gedanke zugrunde, für die Kühlung der Längsschweißnaht bei einem Verpackungstubenherstellungsprozess mit Kühlflüssigkeit den Phasenumwandlungseffekt eines Aggregatzustandswechsels der Kühlflüssigkeit in die Gasphase zu nutzen, bzw. dafür Sorge zu tragen, dass dieser Phasenumwandlungseffekt einen erheblichen Beitrag zur Kühlung der Längsschweißnaht beiträgt, wozu erfindungsgemäß die Kühlflüssigkeit vernebelt, d.h. zu Kühlflüssigkeitsnebel umgewandelt wird und mit diesem die Schweißnaht beaufschlagt wird, wobei zusätzlich Trägergas, beispielsweise Druckluft zugeführt wird, um die verdampfte Kühlflüssigkeit aufzunehmen und mit dem Trägergas aus dem Kühlbereich abzuführen.

Bevorzugt wechselt der Großteil (> 50Gew-%) der in die Gasphase übergehenden Kühlflüssigkeit den Aggregatzustand beim Kontakt mit der Rohrform, insbesondere der Schweißnaht. Aufgrund der Abwärme der Schweißnaht kann bereits ein Teil der Kühlflüssigkeit bzw. der Nebentröpfchen vor Erreichen der Rohrform, d.h. vor einem Kontakt mit der Rohrform, insbesondere auf dem Weg dorthin in die Gasphase wechseln, wodurch die Umgebungstemperatur im Kühlbereich reduziert wird, was ebenfalls zur verbesserten Kühlung beiträgt, zumal auch die auf diese Weise verdampfende Kühlflüssigkeit mit dem Trägergas abtransportiert wird. Neben einer Absenkung der Umgebungstemperatur im Kühlbereich hat eine Verdampfung von Kühlflüssigkeitsnebel in einem Bereich benachbart bzw. mit Abstand zur Rohrform den Vorteil einer Temperaturabsenkung des Kühlflüssigkeitsnebels, insbesondere eines Kühlflüssigkeitsnebelstrahls.

Bei den aus dem Stand der Technik bekannten Verfahren trägt der Verdampfungs- bzw. Phasenwechseleffekt wenn überhaupt, nur vernachlässigbar zum Kühleffekt bei. Bei dem in der DE 10 2015 102 254 B4 beschriebenen Verfahren resultiert die Kühlung aus dem Kontakt der in der Formrinne vorhandenen Flüssigkeitsmenge zur Längsschweißnaht. Ein Verdampfen (Verdunsten) findet bei der bekannten Lösung kaum statt bzw. hat einen vernachlässigbaren Einfluss auf die Kühlwirkung. Ggf. verdunstet ein geringer Anteil des in der Rinne aufgefangenen Wassers, wobei die Oberfläche der in der Rinne aufgenommenen Wassermenge klein ist und die umgebende Luft schnell mit Wasser gesättigt ist, sodass nur eine sehr langsame Verdunstungsrate erzielt wird. Auch verdunstet das Wasser mit deutlichem Abstand zur Naht, also an der Oberfläche des in der Rinne befindlichen "Sees", wobei die geringe Wärmeleitfähigkeit des Wassers dafür sorgt, dass die Verdunstung quasi keinen Effekt auf die Schweißnaht hat. Bei dem in der CH 695 937 A5 beschriebenen Verfahren erfolgt allgemein ein Versprühen, nicht ein Feinstzerkleinern, d.h. Zernebeln der Kühlflüssigkeit. Darüber hinaus findet die Kühlung in einem abgeschlossenen Raum mit feuchtigkeitsgesättigter Luft statt.

Neben einer deutlich reduzierten, benötigten Kühlflüssigkeitsmenge können mit dem erfindungsgemäßen Verfahren und der erfindungsgemäßen Vorrichtung zudem auch deutlich niedrigere Längsschweißnahttemperaturen bei gleicher oder geringerer Kühlstrecke (und gleichzeitig reduzierter Kühlflüssigkeitsmenge) erreicht werden. Bevorzugt wird das Verfahren derart durchgeführt, dass die Schweißnahttemperatur nach dem Kühlprozess weniger als 60°C, noch weiter bevorzugt weniger als 50°C, ganz besonders bevorzugt weniger als 40 °C beträgt.

In Weiterbildung der Erfindung ist mit Vorteil vorgesehen, dass das Verfahren derart durchgeführt bzw. die Vorrichtung so konfiguriert ist, dass ein zugeführter Kühlflüssigkeitsmassestrom, ein zugeführter Trägergasvolumenstrom sowie eine relative Trägergasfeuchte so aufeinander abgestimmt sind, dass über 50 Gew.-%, insbesondere über 60 Gew.-%, noch weiter bevorzugt über 70 Gew.-%, ganz besonders bevorzugt über 80 Gew.-%, noch weiter bevorzugt über 90 Gew.-% der zugeführten Flüssigkeit verdampft, wobei bevorzugt wiederum der Großteil, insbesondere über 70 Gew.-%, noch weiter bevorzugt über 80 Gew.-%, ganz besonders bevorzugt über 90 Gew.-% der insgesamt verdampften Flüssigkeit in die Gasphase übergeht durch bzw. bei einem Kontakt mit der Rohrform, insbesondere unmittelbar der Längsschweißnaht, um somit unmittelbar durch Kontakt die in der Längsschweißnaht beinhaltete Wärmeenergie für den Phasenübergang zu nutzen und damit der Rohrform, insbesondere der Längsschweißnaht zu entziehen. Im Optimalfall wird das Verfahren so durchgeführt und die Vorrichtung so konfiguriert, dass sämtliche zugeführte Kühlflüssigkeit verdampft. Etwaige, nicht verdampfende (geringe) Restmengen können einfach aufgefangen und abgeführt, beispielsweise abgesaugt bzw. abgepumpt werden.

Ganz besonders bevorzugt sind die zum Vernebeln der Kühlflüssigkeit eingesetzten (Vernebelungs-)Mittel derart ausgebildet, dass die Kühlflüssigkeit derart vernebelt wird, dass 90 % der Nebel- bzw. Flüssigkeitströpfchen des Kühlflüssigkeitsnebels eine Partikelgröße (X 90,3) von weniger als 40 $\mu$m, bevorzugt weniger als 30 $\mu$m, noch weiter bevorzugt von weniger als 20 $\mu$m aufweisen. X 90,3 ist ein charakteristischer Kennwert für eine volumenbezogene Partikelgrößenverteilung. Dieser wird in Mikrometern angegeben und bedeutet, dass 90 % des gesamten Partikelvolumens aus Partikeln bestehen, die kleiner sind als die Partikelgröße X 90,3. Derart feinstverteilte bzw. eine geringe Partikelgröße aufweisende Flüssigkeitströpfchen können aufgrund ihrer großen Oberfläche vergleichsweise schnell eine große zur Verdampfung notwendige Energiemenge aufnehmen. Ein Kühlflüssigkeitsnebel mit einem eine derartig geringe Partikelgröße aufweisenden Flüssigkeitströpfchen lässt sich beispielsweise mit einer Zerstäuberdüse SR1020SS der Firma EXAIR Cooperation, Cincinnati, Ohio erzeugen.

Im Hinblick auf die konkrete Zuführung des externen Trägergases gibt es unterschiedliche Möglichkeiten. Ganz besonders bevorzugt ist eine Ausführungsform, bei der das externe Trägergas zumindest teilweise, bevorzugt vollständig, über eine als Vernebelungsdüse ausgebildete Mischdüse zum Vernebeln der Kühlflüssigkeit zugeführt wird. Eine solche Mischdüse sorgt für eine gute Durchmischung von Trägergas und Kühlflüssigkeit bzw. entstehendem Kühlflüssigkeitsnebel. Zusätzlich oder alternativ ist es denkbar externes Trägergas in einem Bereich benachbart zu einer Vernebelungsdüse dem Kühlbereich zuzuführen, insbesondere über eine Verteilerdüse zur möglichst guten Verteilung des Trägergases im Kühlbereich. Unabhängig davon, ob das Trägergas über eine Verneblungsdüse zum Vernebeln der Kühlflüssigkeit zugeführt wird, ist es bevorzugt die Vernebelungsdüse als Saug- bzw. Venturidüse auszubilden.

Im Hinblick auf die Wahl/Zusammensetzung der Kühlflüssigkeit gibt es unterschiedliche Möglichkeiten. Ganz besonders bevorzugt ist es, wenn die Kühlflüssigkeit aus Wasser, insbesondere demineralisiertem Wasser besteht oder zumindest solches umfasst. Wasser, insbesondere demineralisiertes Wasser hat eine Vielzahl von Vorteilen. So ist dieses ungiftig, lebensmittelecht und verdampft rückstandsfrei. Darüber hinaus ist die Verdampfungsenthalpie vergleichsweise hoch und somit der Kühleffekt optimiert. Neben reinem Wasser, insbesondere reinem demineralisiertem Wasser kann als Kühlflüssigkeit eine Flüssigkeitsmischung eingesetzt werden, die bevorzugt Wasser, insbesondere demineralisiertes Wasser enthält. Bevorzugt ist es, wenn Wasser mit einer leichter (als Wasser) flüchtigen bzw. verdampfbaren Flüssigkeit, insbesondere Alkohol, ganz besonders bevorzugt Ethanol eingesetzt wird. Insgesamt ist es bevorzugt, wenn die eingesetzte Kühlflüssigkeit, insbesondere eine Flüssigkeitsmischung, bei Normbedingungen (20°C, 1013 mbar) nicht brennbar und/oder entflammbar ist. Im Falle des Einsatzes von Alkohol, insbesondere Ethanol, hat sich ein Alkoholanteil an der, ansonsten bevorzugt Wasser enthaltenden Kühlflüssigkeit zwischen 0,1 Vol-% und 30 Vol-% als vernünftig herausgestellt. Der Vorteil des Einsatzes von Alkohol, ist u.a. seine antimikrobielle Wirkung, so dass die Gefahr von Bakterien- und/oder Algenbildung weiter reduziert wird. Zusätzlich oder alternativ zu Alkohol können auch andere, insbesondere rückstandsfrei verdampfbare Flüssigkeiten als oder als Bestand der Kühlflüssigkeit eingesetzt werden, insbesondere in Mischung mit Wasser, ganz besonders bevorzugt demineralisiertem Wasser.

Bevorzugt ist die Temperatur der zugeführten Kühlflüssigkeit aus einem Wertebereich zwischen 0°C und 30°C gewählt, im Falle des Einsatzes von, insbesondere beigemischter, leichter flüchtigerer Flüssigkeit, wie beispielsweise Alkohol, insbesondere Ethanol oder Propanol gegebenenfalls auch darunter.

Auch im Hinblick auf die Wahl bzw. Zusammensetzung des eingesetzten Trägergases gibt es unterschiedliche Möglichkeiten. Dieses sollte jedenfalls eine relative Feuchte von weniger als 100 %, bevorzugt weniger als 80 %, noch weiter bevorzugt weniger als 60 %, ganz besonders bevorzugt weniger als 60 %, noch weiter bevorzugt weniger als 40 %, weiter bevorzugt weniger als 30% oder weniger als 20% aufweisen. Je trockener das eingesetzte Trägergas, desto mehr Aufnahmekapazität für in die Gasphase gewechselte Kühlflüssigkeit ist gegeben. Als Trägergas kommt insbesondere Luft, Stickstoff, Sauerstoff, $CO_2$ oder eine Gasmischung, insbesondere mit mindestens einem, bevorzugt mindestens zwei der vorgenannten Gase zum Einsatz. Besonders zweckmäßig ist es, wenn das externe Trägergas über eine Druckgasleitung von einer Druckquelle, insbesondere einem Druckgastank und/oder einer Druckgasflasche und/oder einem Druckgaskompressor mit einem über Umgebungsdruck bzw. Normdruck von 1013 mbar liegendem Förderdruck geführt wird.

Ganz besonders bevorzugt ist es, wenn der Kühlnebel, insbesondere aus einer Vernebelungsdüse, insbesondere in Form einer Mischdüse als Kühlnebelstrahl (Druckstahl) auf die Rohrform, insbesondere unmittelbar auf die Längsschweißnaht gerichtet ist.

Um eine möglichst große Kontaktfläche des Kühlnebels zu der Längsschweißnaht bei gleichzeitig minimierten (seitlichen) Streuverlusten zur Erzeugung einer hohen Verdampfungsrate zu gewährleisten, hat es sich als vorteilhaft herausgestellt, wenn der Strahl (Druckstahl) querschnittlich, d.h. senkrecht zu seiner Hauptströmungsrichtung, linienförmig konturiert ist und sich mit dieser Querschnittsfläche parallel zur Längsschweißnaht in der Förderrichtung erstreckt.

Dabei hat es sich als besonders vorteilhaft herausgestellt, wenn der Strahl senkrecht zu seiner Längserstreckung, d.h. in Richtung der Umfangserstreckung der Rohrform schmal bemessen ist, wobei es besonders zweckmäßig ist, wenn sich eine Auftrefffläche des Strahls auf der Rohrform in Umfangsrichtung (der Rohrform) nicht mehr als 15mm, bevorzugt nicht mehr als 8mm, weiter bevorzugt jeweils nicht mehr als 4mm erstreckt. Bevorzugt beträgt eine Mindestumfangserstreckung der Auftrefffläche 2mm, noch weiter bevorzugt 3mm, ganz besonders bevorzugt 4mm. Mit Vorteil ist die Schweißnaht mittig bezogen auf die Umfangserstreckung in dieser Auftrefffläche angeordnet.

Insgesamt ist es von Vorteil, wenn der Kühlflüssigkeitsmassestrom so eingestellt wird, dass die maßgeblich von dem beschriebenen Phasenwechsel verursachte Kühlleistung aus einem Wertebereich zwischen 5W und 200W, insbesondere zwischen 5W und 100W beträgt. Bevorzugt ist es, wenn der Kühlflüssigkeitsmassestrom aus einem Wertebereich zwischen 20 g/h und 600 g/h, bevorzugt zwischen 30 g/h und 400 g/h, noch weiter bevorzugt zwischen 30 g/h und 300 g/h und/oder der zugeführte externe Trägergasvolumenstrom aus einem Wertebereich zwischen 0,3 $m^3$/h und 50 $m^3$/h, bevorzugt zwischen 0,5 $m^3$/h und 10 $m^3$/h gewählt ist.

Als besonders zweckmäßig hat es sich herausgestellt, wenn ein Verhältniswert aus dem zugeführten Kühlflüssigkeitsmassestrom und einem zugeführten Trägergasvolumenstrom aus einem Wertebereich zwischen 15 g/$m^3$ bis 60 g/$m^3$, vorzugsweise zwischen 25 g/$m^3$ bis 45 g/$m^3$ gewählt ist. Bei großen Verhältniswerten von insbesondere über 20 g/$m^3$ übernimmt ein Teil der in den Kühlflüssigkeits(nebel)-/Trägergasstrahl hinein gewirbelten Umgebungsluft die Aufnahmefunktion für verdunstete Kühlflüssigkeit.

Bevorzugt ist die Länge der Kühlstrecke (Strecke entlang der die Schweißnaht mit Kühlmediumnebel beaufschlagt wird) in Förderrichtung aus einem Wertebereich zwischen 5cm und 50cm, insbesondere zwischen 15cm und 40cm gewählt.

Die Kühlflüssigkeit bzw. der Kühlflüssigkeitsmassestrom wird in Weiterbildung der Erfindung nicht unkontrolliert sondern dosiert, bevorzugt geregelt zugeführt, wobei es besonders zweckmäßig ist, wenn der Kühlmassenvolumenstrom vorgebbar bzw. einstellbar ist. Im Hinblick auf die konkrete Ausgestaltung einer Dosierung, insbesondere Regelung gibt es unterschiedliche Möglichkeiten. So ist es denkbar, einen Ist-Masse- und/oder Volumenstrom mittels eines Flow-Meters zu messen und auf einen Soll-Kühlflüssigkeitsmassestrom- oder -volumenstrom mit geeigneten Regelmitteln zu regeln, beispielsweise durch eine entsprechende Ansteuerung eines Ventils, insbesondere eines Proportionalventils und/oder einer regelbaren Pumpe, beispielsweise einer Getriebepumpe und/oder einer Zahnradpumpe und/oder einer Peristaltikpumpe. Auch ist es möglich die Drehzahl einer Pumpe auf eine Soll-Drehzahl zu regeln. Ganz besonders bevorzugt kommt der Zuführung der Kühlflüssigkeit eine Präzisions-Dosierpumpe zum Einsatz.

Dabei erfolgt die Dosierung bzw. Regelung insbesondere der Gestalt, dass der Kühlmediummassestrom konstant gehalten wird. Denkbar ist auch eine Anpassung des Kühlflüssigkeitsmassestroms an eine Fördergeschwindigkeit der Rohrform in die Förderrichtung, insbesondere derart, dass der Kühlflüssigkeitsmassestrom bei steigender Geschwindigkeit erhöht und bei sinkender Geschwindigkeit reduziert wird. Zusätzlich oder alternativ kann eine Regelung des Kühlflüssigkeitsmassestroms in Abhängigkeit einer zu detektierenden und/oder zu berechnenden Schweißnahttemperatur erfolgen.

Besonders zweckmäßig ist es, die zuvor beschriebene Kühlung mit Kühlflüssigkeitsnebel, insbesondere einem Kühlflüssigkeitsnebelstrahl und der Zuführung externer Trägerluft zu kombinieren mit einem mechanischen Umstülpschritt der Schweißnaht vor und/oder während und/oder nach der Beaufschlagung mit dem Kühlflüssigkeitsnebel. Bevorzugt erfolgt hierbei eine Kraftbeaufschlagung der Längsschweißnaht von außen, insbesondere derart, dass in der Rohrform eine Rinne gebildet wird, in der sich dann die Längsschweißnaht befindet, wobei die Kühlnebelbeaufschlagung bevorzugt zumindest teilweise in diese Rinne hinein erfolgt. Zur Ausbildung der Rinne wird die Schweißnaht, bevorzugt wie in der DE 10 2015 102 254 B4 beschrieben nach radial innen gestülpt, bezogen auf eine sich senkrecht zur Längserstreckung erstreckende Radialerstreckung der Rohrform. Durch die Kombination von Längsschweißnahtumstülpung und Kühlnebelbeaufschlagung werden besonders gute Rundheitsverbesserungen erreicht.

Die erfindungsgemäße Vorrichtung zeichnet sich dadurch aus, dass die Mittel zum Kühlen der Rohrform Vernebelungsmittel zum Vernebeln der zugeführten Kühlflüssigkeit vor dem Benetzen der Rohrform aufweisen, wobei wie zuvor bereits erläutert es besonders zweckmäßig ist, wenn die Vernebelungsmittel als Mischdüse ausgebildet sind oder eine solche umfassen, mit der gleichzeitig die Zuführung von externem Trägergas erfolgt. Zusätzlich oder alternativ zu Mischdüsen können als Verneblungsmittel auch Mikrodüsen eingesetzt werden, wie sie beispielsweise aus der Tintenstrahldruckertechnologie bekannt sind. Auch möglich ist der Einsatz von Ultraschallverdampfern, wie diese im Rahmen der Raumklimatisierung oder bei Inhalationsgeräten zum Einsatz kommen. Eine besonders bevorzugte Mischdüse ist als Saug- bzw. Venturidüse realisiert, welche die Kühlflüssigkeit ansaugt, sodass die Kühlflüssigkeit nicht mit einer Pumpe dem Prozess zugeführt werden muss (was alternativ möglich ist), sondern ein Dosierventil zur Begrenzung auf die richtige Menge ausreicht.

Die Vernebelungsmittel sind dabei unabhängig von ihrer konkreten Gestaltung bevorzugt so ausgebildet und angeordnet, dass die Längsschweißnaht mit dem Kühlflüssigkeitsnebel, insbesondere einem Strahl, ganz besonders bevorzugt einem querschnittlich linienförmigen und sich in der Förderrichtung erstreckenden Strahl belaufschlagbar ist, wobei zum Zuführen von externem, insbesondere trockenem Trägergas, ganz besonders bevorzugt Druckgas entsprechende Trägergaszuführmittel vorgesehen sind, um in den Kühlbereich Trägergas zuzuführen, so dass von dem Kühlflüssigkeitsnebel beim Kontakt mit der Rohrform ein Phasenwechsel in die Gasphase vollziehbar und diese von dem Trägergas abtransportierbar ist.

Bevorzugt ist die erfindungsgemäße Vorrichtung dabei so ausgebildet, dass die zuvor teilweise nur verfahrensgemäß offenbarten Merkmale umsetzbar bzw. ausführbar sind. Hierzu weist die Vorrichtung entsprechend jeweilige strukturelle Mittel auf.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:

Fig. 1a    ein erstes Ausführungsbeispiel einer ausschnittsweise in einer schematischen Längsschnittansicht gezeigte Vorrichtung zur Herstellung eines flexiblen endlosen Tubenrohres.

Fig. 1b    eine Querschnittsansicht der Rohrform gemäß Fig. 1a,

Fig. 2a    eine alternative Ausführungsform einer Vorrichtung zur Herstellung eines endlosen Tubenrohres, wobei verglichen mit dem Ausführungsbeispiel gemäß in Fig. 1a und 1b zusätzlich zur Kühlung der Schweißnaht mit einem Kühlflüssigkeitsnebelstrahl eine mechanische Umstülpung der Schweißnaht erfolgt, und

Fig. 2b    eine Querschnittsansicht der Rohrform gemäß Fig. 2a im Umstülpbereich der Schweißnaht.

In den Figuren sind gleiche Elemente und Elemente mit der gleichen Funktion mit den gleichen Bezugszeichen gekennzeichnet.

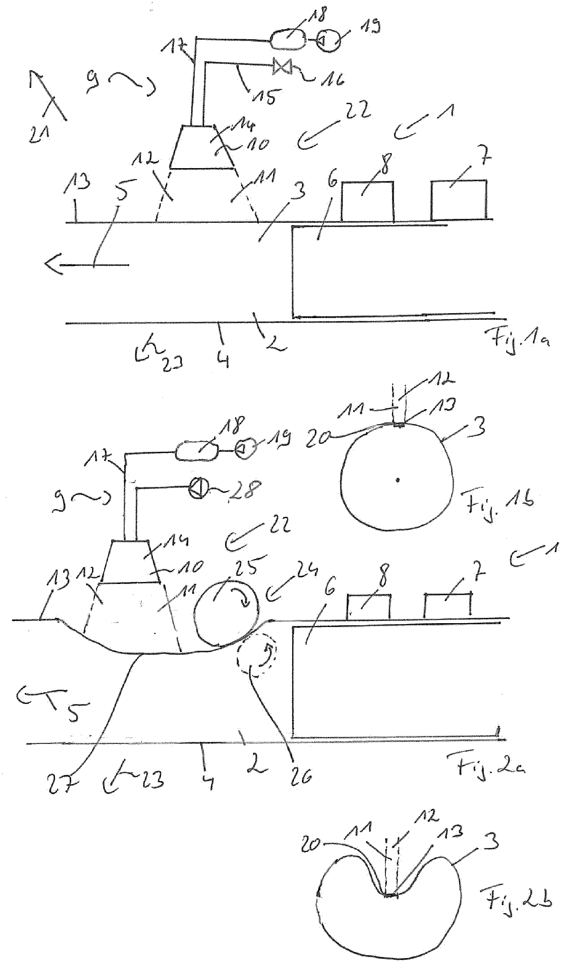

In Fig. 1a ist eine Vorrichtung 1 zum Herstellen eines endlosen (flexiblen bzw. deformierbaren) Tubenrohres 2 für die Herstellung von Kunststofftuben gezeigt. Die Vorrichtung 1 umfasst nicht näher dargestellte, an sich bekannte Mittel zum Fördern eines zuvor zu einer Rohrform 3 geformten ein- oder mehrschichtigen Substratbandes 4 in einer Förderrichtung 5. Die Fördermittel umfassen beispielsweise in an sich bekannter Weise Schweißbänder, die die Rohrform 3 im Bereich der Längskanten zwischen sich aufnehmen und mit einer Klemmkraft beaufschlagen und somit in der Förderrichtung 5 antreiben. Bevorzugt sind zusätzlich entsprechende Antriebsrollen oder Bänder vorgesehen. Jedenfalls wird die Rohrform 3 axial gefördert und zwar zumindest abschnittsweise über einen Dorn 6, der von der Rohrform 3 umschlossen wird. In einem nicht dargestellten, vorhergehenden Verfahrensschritt wird in an sich bekannter Weise das zunächst in einer Ebene liegende flache Substratband 4 zu der gezeigten Rohrform 3 umgeformt. Unter einer Rohrform 3 wird dabei im weitestem Sinne ein Hohlkörper verstanden, der nach einem Schweißschritt umfangsgeschlossen ist. Die Rohrform 3 weist im Bereich von Schweißmitteln 7, hier einer Induktions-Schweißeinrichtung im Querschnitt eine im Wesentlichen kreisförmige Umfangskontur auf, ebenso wie der kreiszylindrische Dorn 6 (andere Umfangskonturen von Rohrform und Dorn sind alternativ realisierbar). In der Zeichnung links schließt an die dargestellten Funktionseinheiten eine Ablängeinrichtung an, in der das endlose Tubenrohr 2 in einzelne Tubenrohrabschnitte unterteilt wird, die dann in an sich bekannter Weise in weiteren Verfahrenschritten mit einem Tubenkopf versehen werden.

Das Substratband 4 wird von den Schweißmitteln 7 im Bereich seiner vorzugsweise auf Stoß angeordneten oder alternativ überlappenden Längskanten in an sich bekannter Weise mit den Schweißmitteln 7 verschweißt.

In der Förderrichtung 5 auf die Schweißmittel 7 folgt eine fakultative Vorkühleinrichtung 8, die bevorzugt als Kontaktkühleinrichtung ausgebildet ist und die die Längsschweißnaht vorkühlt, insbesondere um ein Ablösen eines bevorzugt zum Einsatz kommenden Schweißbandes von der Rohrform bzw. dem Substratband, insbesondere einem Laminat zu erleichtern bzw. störungsfreier zu gestalten.

Darauf gelangt das zur Rohrform 3 umgeformte Laminat 4, d.h. das gerade geschweißte Endlos-Tuberohr zu Mitteln 9 zum Kühlen der Rohrform (Kühlmittel), genauer der beim Schweißvorgang durch Schmelzen mindestens einer Kunststoffschicht im Bereich der Längskanten entstehenden und sich in der Förderrichtung 5 erstreckenden Längsschweißnaht. Die Mittel 9 zum Kühlen der Längsschweißnaht umfassen Vernebelungsmittel 10, hier beispielhaft in Form einer Mischdüse zur Vernebelung, d.h. Feinstverteilung von Kühlflüssigkeit und dadurch Erzeugung von Kühlflüssigkeitsnebel L, der in dem gezeigten Ausführungsbeispiel in Form eines länglichen bzw. linienförmigen und sich in der Förderrichtung 5 erstreckenden Strahls 12 (Druckstrahl) auf die Längsschweißnaht 13 gerichtet ist. Die mittlere Tröpfchengröße der Nebel- bzw. Kühlflüssigkeitstropfen des Kühlflüssigkeitsnebels 11 bzw. des Strahls 12 beträgt in dem gezeigten Ausführungsbeispiel weniger als 20 $\mu$m. In dem konkreten Ausführungsbeispiel werden die Vernebelungsmittel 10 gebildet von einer Mischdüse 1, in die der Kühlflüssigkeit über eine Kühlflüssigkeitsleitung 15 zugeführt wird, vorliegend Wasser oder ein Wasseralkoholgemisch, welches Dosiert wird über ein Dosierventil 16, um einen gleichförmigen, d.h. konstanten Zufluss eines Kühlmediummassestroms zu gewährleisten. Bei Bedarf kann vorgesehen werden, dass über eine entsprechende Regel- bzw. Steuereinheit der bevorzugt einstellbare Kühlflüssigkeitsmassenstrom, insbesondere automatisch, an eine Fördergeschwindigkeit der Rohrform 3 in der Förderrichtung 5 anpassbar ist, insbesondere derart, dass der Kühlflüssigkeitsmassestrom mit abnehmender Geschwindigkeit sinkt bzw. mit zunehmender Geschwindigkeit steigt.

Neben der Kühlflüssigkeit wird der Mischdüse 14 externes Trägergas, d.h. Trägergas von außerhalb des Kühlbereichs, in dem vorliegenden Ausführungsbeispiel Druckluft zu geführt und zwar über eine als Druckgasleitung ausgebildete Trägergasleitung 17, die von einem Gasdrucktank 18 gespeist wird, welcher wiederum in dem gezeigten Ausführungsbeispiel von einem Kompressor 19 mit Druckluft versorgt wird. Bei Bedarf kann, was vorteilhaft ist, jedoch aus Übersichtlichkeitsgründen nicht dargestellt ist über entsprechende Dosiermittel der Trägergasvolumenstrom eingestellt werden, insbesondere über ein in der Trägergasleitung vorgesehene Ventil, insbesondere ein Proportionalventil.

Die eingesetzte Mischdüse kann beispielweise als Saug- bzw. Venturidüse eingesetzt werden, auch ist bei entsprechender Dimensionierung, insbesondere Erhöhung des externen Trägergasvolumenstroms auch der Einsatz einer Nichtsaug-Mischdüse umsetzbar. Zusätzlich oder alternativ ist es möglich, Kühlflüssigkeit und externes Trägergas separat voneinander bzw. nebeneinander im Kühlbereich 22 zuzuführen, beispielweise unter Verzicht einer Mischdüse und des Einsatzes einer reine Vernebelungsdüse für die Kühlflüssigkeit und beispielsweise einer Verteilerdüse für das Trägergas.

In Fig. 1b ist ersichtlich, dass der Strahl 12, bestehend aus Kühlflüssigkeitsnebel 11 und Trägergas eine geringe Erstreckung in Umfangsrichtung der Rohrform 3 aufweist, sodass eine Auftreffffläche 20 die Schweißnaht 13 in beide Umfangsrichtungen nur geringfügig überragt. Der Großteil des auf die Längsschweißnaht 13 auftreffenden Kühlflüssigkeitsnebel 11 bzw. der Großteil der zugeführten Kühlflüssigkeit verdampft beim Kontakt mit der heißen Schweißnaht 13, sodass also die Verdampfungsenergie aus der Schweißnaht 13 stammt. Zusätzlich verdampft ein geringerer Anteil von Kühlflüssigkeitsnebel 11 vor Erreichen der Schweißnaht, d.h. auf dem Weg dorthin, wodurch die Temperatur der verbleibenden Flüssigkeitströpfchen weiter reduziert wird.

Durch den Verdampfungsprozess insgesamt geht also im Ergebnis ein Großteil der vernebelten Kühlflüssigkeit in die Gasphase über und wird von dem Trägergas, vorliegend Luft abgeführt. Bezugszeichen 21 kennzeichnet entsprechende Abführmittel, im einfachsten Fall ein Abgasrohr, wobei auch aktiv, beispielsweise über ein Gebläse aus dem Kühlbereich 22, insbesondere gesättigtes, Trägergas bzw. Trägergas mit aufgenommener bzw. erhöhter Feuchte abtransportiert wird. Bei Bedarf können für kleinere, nicht verdampfende Restmengen an Kühlflüssigkeit Abflussmittel 23 vorgesehen sein, die bei Bedarf auch als Saug- oder Pumpmittel ausgestaltet werden können.

Im Folgenden wird das Ausführungsbeispiel gemäß den Fig. 2a und 2b erläutert, wobei zur Vermeidung von Wiederholungen im Wesentlichen nur auf die Unterschiede zu dem vorstehend erläuterten Ausführungsbeispiel eingegangen wird. Im Hinblick auf die Gemeinsamkeiten wird auf vorstehende Figurenbeschreibung mit zugehörigen Figuren verwiesen.

Als zusätzliche Funktionalität umfasst die Vorrichtung 1 gemäß Fig. 2a Umstülpmittel 24 zum temporären Umformen der noch nicht vollständig erkalteten Naht, welche gewährleisten, dass die Naht während des vollständigen Erkaltens eine Form annimmt, die der Ausbildung der störenden Ovalität zusätzlich entgegenwirkt. Diese Umstülpmittel 24 sind in der Förderrichtung 5 in dem gezeigten Ausführungsbeispiel vor der Kühlnebelbeaufschlagung angeordnet, können jedoch zusätzlich oder alternativ auch im Bereich der Kühlmediumbeaufschlagung und/oder in Förderrichtung 5 danach angeordnet sein. Die Umstülpmittel 24 sind in dem gezeigten Ausführungsbeispiel ausgebildet wie in der DE 10 2015 102 254 B4 beschrieben, sodass bezüglich detailliertere Ausführungen auf die Druckschrift verwiesen wird. Die Umstülpmittel 24 umfassen hier beispielhaft zwei gegenläufige Rollen 25, 26, von denen eine Rolle 25 außerhalb der Rohrform und die andere Rolle 26 innerhalb der Rohrform angeordnet ist. Die Umstülpmittel 24 beaufschlagen die Schweißnaht von radial außen nach radial innen mit einer Kraft und stülpen dabei die Längsschweißnaht 13 in radialer Richtung nach innen, bezogen auf die Längsachse der Rohrform 3, wobei die Längsachse mit der Förderrichtung 5 zusammenfällt. Hierdurch wird in dem gezeigten Ausführungsbeispiel in der Rohrform 3 eine Rinne 27 gebildet, in welcher hier lediglich beispielhaft die Kühlnebelbeaufschlagung erfolgt. Denkbar ist zusätzlich oder alternativ eine Kühlflüssigkeitsbeaufschlagung in einem Bereich vor und/oder in einem Bereich nach der Rinne 27. Wie gezeigt und im Detail in der DE 10 2015 102 254 B4 beschrieben ist, ist die Rinne 27 aufgrund der Ausbildung und Anordnung der Umstülpmittel 24 ortsfest, was bedeutet, dass die Rohrform 3 quasi die Rinne 27 in der Förderrichtung 5 durchläuft.

Bei dem Ausführungsbeispiel gemäß Fig. 2a wurde anstelle eines Dosierventils eine Dosierpumpe 28 realisiert.

Eine Abschätzung der für einen gegebenen Prozess minimal erforderlichen Kühlleistung $P_c$ lässt sich aus folgenden Prozessparametern berechnen: Laminat-Transportgeschwindigkeit (Prozessgeschwindigkeit): v (typisch: 0.1 m/s bis 3 m/s)

Materialdaten des erhitzten Bereichs (welcher im wesentlichen die Schweißnaht umfasst):

Dichte $\delta$ (typisch 0.92 g/cm$^3$, LDPE)
mittlere spezifische Wärmekapazität $c_p$ im interessierenden
Temperaturbereich (~2.5 J/(g*K))

Effektive Abmessungen des erhitzten Bereichs

Breite b, (typisch: einige mm)
Dicke d (typisch: einige 100 $\mu$m)

erwünschte Temperaturdifferenz bzw. erforderliche Temperaturreduktion $\Delta T$ (10 K ... 80 K)
Dann ist

$$P_c = v * b * d * \delta * c_p * \Delta T$$

In der Praxis nimmt $P_c$ oftmals Werte zwischen 5 W und 150 W an. Die starken Unterschiede resultieren vor allem aus unterschiedlichen Prozessgeschwindigkeiten und verschiedenen Geometrien des erhitzten Bereichs. Der minimal erforderliche Kühlflüssigkeitsfluss (theoretischer Wert, der vollständiges Verdampfen voraussetzt aber gleichzeitig weitere Kühleffekte vernachlässigt) lässt sich unter Berücksichtigung der Verdampfungsenthalpie der Kühlflüssigkeit abschätzen. Beispielsweise reichen ca. 50g (bzw. 150g) Wasser pro Stunde (h) aus, um eine Kühlleistung von ca. 33 (bzw. 100) Watt zu erbringen. Bei Verfahren, welche sich nicht den Verdampfungseffekt zu Nutzen machen, muss ein Vielfaches dieser Menge dem Prozess zugeführt werden. Die zum vollständigen Verdampfen erforderliche, den Dampf aufnehmende, Trockenluftmenge kann ebenfalls abgeschätzt werden. Es ergeben sich ca. 2 (6) m$^3$ Luft pro Stunde (h) bzw. 0.56 (1.7) l/s. In der Praxis reichen deutlich kleinere Luftzufuhrraten, weil im Prozess auch Umgebungsluft mit verwirbelt wird.

## Bezugszeichenliste

    1 Vorrichtung
    2 Tubenrohr
    3 Rohrform
    4 Substratband
    5 Förderrichtung
    6 Dorn
    7 Schweißmittel
    8 Vorkühleinrichtung
    9 Mittel zum Kühlen (Kühlmittel)
    10 Vernebelungsmittel
    11 Kühlflüssigkeitsnebel
    12 Strahl (Druckstrahl)
    13 Längsschweißnaht
    14 Mischdüse
    15 Kühlflüssigkeitsleitung
    16 Dosierventil
    17 Trägergasleitung
    18 Gasdrucktank
    19 Kompressor
    20 Auftrefffläche
    21 Abführmittel
    22 Kühlbereich
    23 Abflussmittel
    24 Umstülpmittel
    25 Rolle
    26 Rolle
    27 Rinne
    28 Dosierpumpe

## Patentansprüche

**1.**    Verfahren zum Herstellen eines endlosen Tubenrohres (2) für die Herstellung von Kunststofftuben, wobei ein mindestens eine Kunststoffschicht umfassendes oder daraus bestehendes, flexibles Substratband (4), insbesondere ein Laminat zu einer Rohrform (3) geformt und in einer Förderrichtung (5) entlang von Schweißmitteln (7) gefördert und entlang seiner sich in der Förderrichtung (5) erstreckenden Längskanten unter Ausbildung einer Längsschweißnaht (13) verschweißt und danach durch unmittelbares Beaufschlagen mit einer Kühlflüssigkeit gekühlt wird, **dadurch gekennzeichnet, dass** die Kühlflüssigkeit vor dem Benetzen vernebelt wird und die Längsschweißnaht (13) mit Kühlflüssigkeitsnebel (11) benetzt wird und zusätzlich externes Trägergas, insbesondere Druckgas, zugeführt wird, so dass Kühlflüssigkeitsnebel (11) beim Kontakt mit der Rohrform (3) einen Phasenwechsel in die Gasphase vollzieht und mit dem Trägergas abtransportiert wird.

2. Verfahren nach Anspruch 1, **dadurch gekennzeichnet, dass** ein zugeführter Kühlflüssigkeitsmassestrom, ein zugeführter Trägergasvolumenstrom sowie eine relative Trägergasfeuchte so aufeinander abgestimmt sind, dass über 50Gew-%, insbesondere über 60Gew-%, noch weiter bevorzugt über 70Gew-%, ganz besonders bevorzugt über 80Gew%, noch weiter bevorzugt über 90Gew% der zugeführten Kühlflüssigkeit verdampft.

3. Verfahren nach einem der Ansprüche 1 oder 2, **dadurch gekennzeichnet, dass** die Kühlflüssigkeit derart vernebelt wird, dass 90% der Nebeltröpfchen des Kühlflüssigkeitsnebels eine x90,3 Partikelgröße von weniger als 40μm, bevorzugt weniger als 30μm, noch weiter bevorzugt von weniger als 20μm aufweisen.

4. Verfahren nach einem der vorhergehenden Ansprüche, **dadurch gekennzeichnet, dass** das externe Trägergas zumindest teilweise, bevorzugt vollständig, über eine als Vernebelungsdüse ausgebildete Mischdüse (14) zum Vernebeln der Kühlflüssigkeit zugeführt wird.

5. Verfahren nach einem der vorhergehenden Ansprüche, **dadurch gekennzeichnet, dass** als Kühlflüssigkeit Wasser, insbesondere demineralisiertes Wasser, oder eine, bevorzugt nicht brennbare, Mischung aus Wasser und einer anderen, insbesondere leichter flüchtigen, Flüssigkeit, insbesondere Alkohohl, bevorzugt Ethanol und/oder Propanol eingesetzt wird.

6. Verfahren nach einem der vorhergehenden Ansprüche, **dadurch gekennzeichnet, dass** als externes Trägergas Luft, Stickstoff, Sauerstoff, $CO_2$ oder eine Gasmischung, insbesondere aus mindestens einem, bevorzugt mindestens zwei der vorgenannten Gase, eingesetzt wird, wobei das Trägergas bevorzugt über eine Druckgasleitung von einer Druckquelle, insbesondere einem Druckgastank und/oder einer Druckgasflasche und/oder einem Druckgaskompressor (19) mit einem über Umgebungsdruck liegenden Förderdruck zugeführt wird.

7. Verfahren nach einem der vorhergehenden Ansprüche, **dadurch gekennzeichnet, dass** die Rohrform (3) mit dem Kühlflüssigkeitsnebel in Form eines auf die Längsschweißnaht (13) gerichteten, bevorzugt querschnittlich linienförmigen, Strahls (12) beaufschlagt wird, insbesondere derart, dass sich eine Auftrefffläche des Strahl (12) auf der Rohrform (3) in Umfangsrichtung nicht mehr als 15mm, weiter bevorzugt nicht mehr als 8mm, weiter bevorzugt nicht mehr als 4mm erstreckt.

8. Verfahren nach einem der vorhergehenden Ansprüche, **dadurch gekennzeichnet, dass** der zugeführte Kühlflüssigkeitsmassestrom aus einem Wertebereich zwischen 20g/h und 600g/h, bevorzugt zwischen 30g/h und 400g/h, noch weiter bevorzugt zwischen 30g/h und 300g/h und/oder der zugeführte externe Trägergasvolumenstrom aus einem Wertebereich zwischen $0,3m^3/h$ und $15m^3/h$, bevorzugt zwischen $0,5m^3/h$ und $10m^3/h$ gewählt wird.

9. Verfahren nach einem der vorhergehenden Ansprüche, **dadurch gekennzeichnet, dass** die Kühlflüssigkeit dosiert, bevorzugt geregelt, mit einem vorgegebenen, bevorzugt einstellbaren, Kühlflüssigkeitsmassestrom zugeführt wird.

10. Verfahren nach einem der vorhergehenden Ansprüche, **dadurch gekennzeichnet, dass** die Längsschweißnaht (13) der Rohrform (3) vor und/oder während der Beaufschlagung mit Kühlflüssigkeitsdampf umgestülpt wird durch Verformung der Rohrform (3), bevorzut derart, dass in der Rohrform (3) eine Rinne (27) gebildet wird, die Weiter bevorzugt mit dem Kühlmediumnebel beaufschlagt wird.

11. Vorrichtung zum Herstellen eines endlosen Tubenrohres (2) für die Herstellung von Kunststofftuben, bevorzugt ausgebildet zur Durchführung eines Verfahrens nach einem der vorhergehenden Ansprüche, mit Mitteln zum Umformen eines mindestens eine Kunststoffschicht umfassenden oder daraus bestehenden, flexiblen Substratbands (4), insbesondere eines Laminates zu einer Rohrform (3) und mit Mitteln zum Fördern der Rohrform (3) in einer Förderrichtung (5) entlang von Schweißmitteln (7), die ausgebildet sind zum Verschweißen des zur Rohform geformten Substratbandes (4) entlang seiner sich in der Förderrichtung (5) erstreckenden Längskanten unter Ausbildung einer Längsschweißnaht (13) und mit Mitteln (9) zum Kühlen der Rohrform (3) durch unmittelbares Beaufschlagen mit einer Kühlflüssigkeit,
**dadurch gekennzeichnet,**
**dass** die Mittel (9) zum Kühlen der Rohrform (3) Vernebelungsmittel (10) zum Vernebeln der zugeführten Kühlflüssigkeit vor dem Benetzen der Rohrform (3) aufweisen, die so ausgebildet und angeordnet sind, dass die Längsschweißnaht (13) mit Kühlflüssigkeitsnebel beaufschlagbar ist und dass die Mittel (9) zum Kühlen der Rohrform (3) Trägergasmittel zum Zuführen von externem Trägergas, insbesondere Druckgas, aufweisen, so dass von dem Kühlflüssigkeitsnebel ein Phasenwechsel in die Gasphase vollziehbar und von dem Trägergas abtransportierbar ist.

12. Vorrichtung nach Anspruch 11,
**dadurch gekennzeichnet,**
**dass** das externe Trägergas zumindest teilweise, bevorzugt vollständig, über eine als Vernebelungsdüse ausgebildete Mischdüse (14) zum Vernebeln der Kühlflüssigkeit zuführbar ist.

13. Vorrichtung nach einem der Ansprüche 11 oder 12,
**dadurch gekennzeichnet,**
**dass** das externe Trägergas, insbesondere Luft oder Stickstoff oder Sauerstoff oder $CO_2$ oder eine Gasmischung, insbesondere aus mindestens zwei der vorgenannten Gase, über eine Druckgasleitung von einer Druckquelle, insbesondere einem Druckgastank und/oder einer Druckgasflasche und/oder einem Druckgaskompressor (19) mit einem über Umgebungsdruck liegenden Förderdruck zuführbar ist.

14. Vorrichtung nach einem der Ansprüche 11 bis 13,
**dadurch gekennzeichnet,**
**dass** Umstülpmittel (24) zum Umstülpen der Längsschweißnaht (13) der Rohrform (3) vor und/oder während der Beaufschlagung mit Kühlflüssigkeitsnebel vorgesehen sind, die bevorzugt derart ausgebildet und angeordnet sind, dass mit diesen in der Rohrform (3) eine Rinne (27) gebildet wird, die weiter bevorzugt mit dem Kühlmediumnebel beaufschlagbar ist.

## Claims

1. A method for manufacturing an endless tube pipe (2) for the manufacture of plastic tubes, wherein a flexible substrate band (4), in particular a laminate, comprising or made of at least one plastic layer, is formed into a tube form (3) and conveyed in a conveying direction (5) along welding means (7) and is welded along its longitudinal edges extending in the conveying direction (5) by forming a longitudinal welding seam (13), and is afterwards cooled by immediately applying a cooling liquid,
**characterized in that**
the cooling liquid is nebulized prior to wetting and the longitudinal welding seam (13) is wetted with cooling liquid mist (11), and external carrier gas, in particular pressurized gas, is additionally supplied so that cooling liquid mist (11) undergoes a phase change to the gas phase when coming into contact with the tube form (3) and is transported away with the carrier gas.

2. The method according to claim 1,
**characterized in that**
a supplied cooling liquid mass flow, a supplied carrier gas volume flow and a relative carrier gas moisture are coordinated in such a manner that over 50 wt%, in particular over 60 wt%, even further preferably over 70 wt%, particularly preferably over 80 wt%, even further preferably over 90 wt% of the cooling liquid supplied evaporates.

3. The method according to any of the claims 1 or 2,
**characterized in that**
the cooling liquid is nebulized in such a way that 90 % of the mist droplets of the cooling liquid mist have a x90,3 particle size of less than 40 $\mu$m, preferably less than 30 $\mu$m, more preferably less than 20 $\mu$m.

4. The method according to any of the preceding claims,
**characterized in that**
the external carrier gas is supplied at least partly, preferably completely, via a mixing nozzle (14) which is realized as a nebulization nozzle for nebulizing the cooling liquid.

5. The method according to any of the preceding claims,
**characterized in that**
water, in particular demineralized water, or a preferably non-flammable mixture of water and of another liquid, in particular a more volatile liquid, in particular alcohol, preferably ethanol and/or propanol, is used as the cooling liquid.

6. The method according to any of the preceding claims,
**characterized in that**
air, nitrogen, oxygen, $CO_2$ or a gas mixture, in particular of at least one, preferably of at least two of the aforementioned gases, is used as the external carrier gas, the carrier gas preferably being supplied via a pressurized gas line from a pressure source, in particular a pressurized gas tank and/or a pressurized gas bottle and/or a pressurized gas compressor (19), at a conveying pressure higher than the ambient pressure.

7. The method according to any of the preceding claims,
**characterized in that**
the cooling liquid mist is applied to the tube form (3) in the form of a jet (12) which is directed at the longitudinal welding seam (13) and which is preferably linear in cross-section, in particular in such a manner that an impact surface of the jet (12) on the tube form (3) extends no more than 15 mm, further preferably no more than 8 mm, further preferably no more than 4 mm in the circumferential direction.

8. The method according to any of the preceding claims,
**characterized in that**
the supplied cooling liquid mass flow is selected from a value range between 20 g/h and 600 g/h, preferably between 30 g/h and 400 g/h, even further preferably between 30 g/h and 300 g/h and/or the supplied external carrier gas volume flow is selected from a value range between 0.3 $m^3$/h and 15 $m^3$/h, preferably between 0.5 $m^3$/h and 10 $m^3$/h.

9. The method according to any of the preceding claims,
**characterized in that**
the cooling liquid is supplied in a metered, preferably controlled, way at a predefined, preferably adjustable, cooling liquid mass flow.

10. The method according to any of the preceding claims,
**characterized in that**
prior to and/or during the application of cooling liquid steam, the longitudinal welding seam (13) of the tube form (3) is turned inside out by deforming the tube form (3), preferably in such a way that a groove (27), which is further preferably exposed to the cooling medium mist, is formed in the tube form (3).

11. A device for manufacturing an endless tube pipe (2) for the manufacture of plastic tubes, preferably realized for carrying out a method according to any of the preceding claims, having means for deforming a flexible substrate band (4), in particular a laminate, comprising or made of at least one plastic layer, to a tube form (3), and having means for conveying the tube form (3) in a conveying direction (5) along welding means (7) which are designed to weld the substrate band formed into the tube form along its longitudinal edges extending in the conveying direction (5) by forming a longitudinal welding seam (13), and having means (9) for cooling the tube form (3) by immediately applying a cooling liquid,
**characterized in that**
the means (9) for cooling the tube form (3) comprise nebulizing means (10) for nebulizing the supplied cooling liquid before the wetting of the tube form (3) which are realized and disposed in such a manner that cooling liquid mist can be applied to the longitudinal welding seam (13) and that the means (9) for cooling the tube form (3) have carrier gas means for supplying external carrier gas, in particular pressurized gas, so that the cooling liquid mist (11) can undergo a phase change to the gas phase and can be transported away by the carrier gas.

12. The device according to claim 11,
**characterized in that**
the external carrier gas is supplied at least partly, preferably completely, via a mixing nozzle (14) which is realized as a nebulization nozzle for nebulizing the cooling liquid.

13. The device according to any of the claims 11 or 12,
**characterized in that**
the external carrier gas, in particular air or nitrogen or oxygen or $CO_2$ or a gas mixture, in particular of at least two of the aforementioned gases, is supplied via a pressurized gas line from a pressure source, in particular a pressurized gas tank and/or a pressurized gas bottle and/or a pressurized gas compressor (19), at a conveying pressure higher than the ambient pressure.

14. The device according to any of the claims 11 to 13,
**characterized in that**
turning means (24) for turning the longitudinal welding seam (13) of the tube form (3) inside out prior to and/or during the application of cooling liquid mist are provided, which are preferably realized and disposed in such a manner that a groove (27), which can further preferably be exposed to the cooling medium mist, is formed in the tube form (3) by means of said turning means (24).

**Revendications**

1. Procédé de fabrication d'un tuyau tubulaire (2) sans fin pour la fabrication de tubes en matière plastique, une bande de substrat (4) flexible, en particulier un stratifié, qui comprend au moins une couche en matière plastique ou se compose de celle-ci étant formée en une forme tubulaire (3) et étant convoyée dans une direction de convoyage (5) le long de moyens de soudage (7) et étant soudée le long de ses bords longitudinaux qui s'étendent dans la direction de convoyage (5), en réalisant une soudure longitudinale (13), et étant refroidie ensuite moyennant une soumission immédiate à un liquide de refroidissement
**caractérisé en ce que**
le liquide de refroidissement est brumisé avant le mouillage et la soudure longitudinale (13) est mouillée avec de la brume de liquide de refroidissement (11) et du gaz porteur externe, en particulier du gaz comprimé, est en outre amené de sorte que de la brume de liquide de refroidissement (11) change de phase, passant dans la phase vapeur, lors du contact avec la forme tubulaire (3) et est enlevée avec le gaz porteur.

2. Procédé selon la revendication 1,
**caractérisé en ce qu'**
un débit massique de liquide de refroidissement amené, un débit volumique de gaz porteur amené ainsi qu'une humidité de gaz porteur relative sont concordés entre eux de telle façon que plus de 50 % en poids, en particulier plus de 60 % en poids, de manière particulièrement préférée plus de 70 % en poids, de manière tout particulièrement préférée plus de 80 % en poids, mieux encore plus de 90 % en poids, du liquide de refroidissement amené se vaporise.

3. Procédé selon l'une quelconque des revendications 1 ou 2
**caractérisé en ce que**
le liquide de refroidissement est brumisé de telle manière que 90 % des gouttelettes de brume de la brume de liquide de refroidissement présentent une taille des particules x90,3 de moins de 40 $\mu$m, de manière préférée de moins de 30 $\mu$m, de manière particulièrement préférée de moins de 20 $\mu$m.

4. Procédé selon l'une quelconque des revendications précédentes,
**caractérisé en ce que**
le gaz porteur externe est amené, au moins en partie, de manière préférée complètement, au travers d'une buse mélangeuse (14) pour brumiser le liquide de refroidissement qui est réalisée comme une buse de brumisation.

5. Procédé selon l'une quelconque des revendications précédentes,
**caractérisé en ce que**
le liquide de refroidissement est de l'eau, en particulier de l'eau déminéralisée, ou un mélange, qui est de manière préférée incombustible, d'eau et d'un autre liquide, en particulier plus volatile, en particulier de l'alcool, de manière préférée de l'éthanol et/ou du propanol.

6. Procédé selon l'une quelconque des revendications précédentes,
**caractérisé en ce que**
le gaz porteur externe est de l'air, de l'azote, de l'oxygène, du dioxyde de carbone ou un mélange gazeux, en particulier consistant d'au moins un des gaz mentionnés ci-dessus, de manière préférée d'au moins deux gaz des gaz mentionnés ci-dessus, ledit gaz porteur étant amené de manière préférée au travers d'une conduite de gaz comprimé à partir d'une source de pression, en particulier d'un réservoir sous pression et/ou d'une bouteille à gaz comprimé et/ou d'un compresseur à gaz comprimé (19), avec une pression de convoyage supérieure à la pression ambiante.

7. Procédé selon l'une quelconque des revendications précédentes,
**caractérisé en ce que**
la forme tubulaire (3) est soumise à la brume de liquide de refroidissement en forme d'un jet (12) qui est dirigé vers la soudure longitudinale (13) et qui est linéaire en section transversale de manière préférée, en particulier de telle manière que l'extension d'une surface d'arrivée du jet (12) sur la forme tubulaire (3) ne dépasse pas 15 mm, de manière particulièrement préférée ne dépasse pas 8 mm, mieux encore ne dépasse pas 4 mm, dans la direction circonférentielle.

8. Procédé selon l'une quelconque des revendications précédentes,
**caractérisé en ce que**
le débit massique de liquide de refroidissement amené est choisi d'une plage de valeur entre 20 g/h et 600 g/h, de manière préférée entre 30 g/h et 400 g/h, de manière particulièrement préférée entre 30 g/h et 300 g/h, et/ou le débit volumique de gaz porteur externe amené est choisi d'une plage de valeur entre 0,3 m$^3$/h et 15 m$^3$/h, de manière préférée entre 0,5 m$^3$/h et 10 m$^3$/h.

9. Procédé selon l'une quelconque des revendications précédentes,
**caractérisé en ce que**
le liquide de refroidissement est amené de façon dosée, de manière préférée de façon réglée, avec un débit massique de liquide de refroidissement prédéterminé qui peut être ajusté de manière préférée.

10. Procédé selon l'une quelconque des revendications précédentes
**caractérisé en ce que**
la soudure longitudinale (13) de la forme tubulaire (3) est retournée avant et/ou lors de la soumission à la vapeur de liquide de refroidissement, en déformant la forme tubulaire (3), de manière préférée de telle manière qu'une rigole (27) est formée dans la forme tubulaire (3), qui est soumise à la brume de liquide de refroidissement de manière particulièrement préférée.

11. Dispositif destiné à la fabrication d'un tuyau tubulaire (2) sans fin pour la fabrication de tubes en matière plastique, de manière préférée étant réalisé pour la mise en oeuvre d'un procédé selon l'une quelconque des revendications précédentes, ayant des moyens pour transformer une bande de substrat (4) flexible, en particulier un stratifié, qui comprend au moins une couche en matière plastique ou se compose de celle-ci étant formée en une forme tubulaire (3), et ayant des moyens pour convoyer la forme tubulaire (3) dans une direction de convoyage (5) le long de moyens de soudage (7) qui sont réalisés pour souder la bande de substrat (4) formée en la forme tubulaire le long de ses bords longitudinaux qui s'étendent dans la direction de convoyage (5), en réalisant une soudure longitudinale (13), et ayant des moyens (9) pour refroidir la forme tubulaire (3) moyennant une soumission immédiate à un liquide de refroidissement,
    **caractérisé en ce que**
    les moyens (9) pour refroidir la forme tubulaire (3) présentent des moyens de brumisation (10) pour brumiser le liquide de refroidissement amené avant le mouillage de la forme tubulaire (3), lesdits moyens de brumisation étant réalisés et disposés de telle façon que la soudure longitudinale (13) peut être soumise à de la brume de liquide de refroidissement et que les moyens (9) pour refroidir la forme tubulaire (3) présentent des moyens de gaz porteur pour amener du gaz porteur externe, en particulier du gaz comprimé, de sorte que la brume de liquide de refroidissement peut changer de phase, passant dans la phase vapeur, et peut être enlevée par le gaz porteur.

12. Dispositif selon la revendication 11,
    **caractérisé en ce que**
    le gaz porteur externe peut être amené, au moins en partie, de manière préférée complètement, au travers d'une buse mélangeuse (14) pour brumiser le liquide de refroidissement qui est réalisée comme une buse de brumisation.

13. Dispositif selon l'une quelconque des revendications 11 ou 12,
    **caractérisé en ce que**
    le gaz porteur externe, en particulier de l'air ou de l'azote ou de l'oxygène ou du dioxyde de carbone ou un mélange gazeux, en particulier consistant d'au moins deux des gaz mentionnés ci-dessus, peut être amené au travers d'une conduite de gaz comprimé à partir d'une source de pression, en particulier d'un réservoir sous pression et/ou d'une bouteille à gaz comprimé et/ou d'un compresseur à gaz comprimé (19), avec une pression de convoyage supérieure à la pression ambiante.

14. Dispositif selon l'une quelconque des revendications 11 à 13,
    **caractérisé en ce que**
    des moyens de retournement (24) pour retourner la soudure longitudinale (13) de la forme tubulaire (3) avant et/ou lors de la soumission à de la brume de liquide de refroidissement sont prévus, étant réalisés et disposés de manière préférée de telle manière qu'une rigole (27) est formée dans la forme tubulaire (3) à l'aide desdits moyens, qui peut être soumise à la brume de liquide de refroidissement de manière particulièrement préférée.

Fig. 1a

Fig. 1b

Fig. 2a

Fig. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 695937 A5

- DE 102015102254 B4